# FASCICULE DE BREVET EUROPEEN

(11) **EP 0 847 831 B1**
(45) Date de publication et mention de la délivrance du brevet: **04.08.1999**
(21) Numéro de dépôt: 98400277.4
(22) Date de dépôt: 09.02.1998
(51) Int. Cl.: B23K 35/40, B23K 35/02

(54) **Procédé de fabrication de fils fourrés étanches pour le soudage à l'arc**
Verfahren zur Herstellung von gefüllten dichten Drähten für das Lichtbogenschweissen
Method of manufacturing filled hermetic wires for arc welding

(43) Date de publication de la demande: 17.06.1998
(73) Titulaire: LA SOUDURE AUTOGENE FRANCAISE, 75321 Paris Cédex 07 (FR)
(72) Inventeur: Bonnet, Christian, 95420 Saint-Gervais (FR); Leduey, Bruno, 95550 Bessancourt (FR)
(74) Mandataire: Le Moenner, Gabriel

(56) Documents cités:
- EP-A- 0 136 276
- US-A- 4 673 121
- PATENT ABSTRACTS OF JAPAN vol. 007, no. 269 (M-259), 30 novembre 1983 & JP 58 148096 A (SHIN NIPPON SEITETSU KK), 3 septembre 1983,
- PATENT ABSTRACTS OF JAPAN vol. 015, no. 463 (M-1183), 25 novembre 1991 & JP 03 198998 A (KAWASAKI STEEL CORP), 30 août 1991,
- PATENT ABSTRACTS OF JAPAN vol. 015, no. 463 (M-1183), 25 novembre 1991 & JP 03 198997 A (KAWASAKI STEEL CORP), 30 août 1991,

## Description

L'invention concerne un procédé de fabrication d'un tube ou fil métallique soudé étanche contenant des éléments de remplissage, un fil fourré étanche de soudage, et un procédé de soudage mettant en oeuvre un tel fil fourré étanche, ainsi qu'une soudure susceptible d'être obtenue par mise en oeuvre du procede de soudage.

Les fils fourrés de soudage sont classiquement constitués d'au moins une enveloppe métallique externe tubulaire remplie d'éléments de remplissage sous forme de poudre et/ou de particules, de nature notamment métallique et/ou minérale et/ou organique.

Dans le cadre de la présente invention, on appelle éléments de remplissage, un ou plusieurs constituants identiques ou différents, de même nature et/ou de natures différentes, sous forme de poudre et/ou de particules et/ou sous toute autre forme agglomérée analogue, tels les flux de remplissage de fils fourrés de soudage par exemples.

On peut classer les fils fourrés de soudage, et plus généralement les tubes contenant des éléments de remplissage, en deux grandes catégories en fonction de leur morphologie au diamètre d'utilisation, à savoir les tubes ou les fils fourrés sertis non-étanches et les tubes ou les fils fourrés soudés étanches.

Les tubes ou fils fourrés sertis se caractérisent par une section à géométrie plus ou moins complexe et par un joint longitudinal non-étanche résultant d'un sertissage des deux bords longitudinaux de la feuille métallique formant l'enveloppe tubulaire externe du tube, l'un avec l'autre.

A l'inverse, les tubes ou fils fourrés soudés étanches se caractérisent par la présence d'un joint longitudinal étanche résultant d'un soudage l'un à l'autre, des deux bords longitudinaux de ladite feuille métallique.

Or, les tubes ou fils fourrés soudés étanches présentent plusieurs avantages par rapport aux tubes ou fils fourrés sertis.

En effet, dans le cas des tubes ou fils fourrés étanches, il est possible de faire suivre l'opération de soudage destinée à unir les deux bords de la feuille métallique par une opération de tréfilage par voie humide et/ou, dans le cas des fils fourrés en acier, d'une opération de cuivrage externe de la surface desdits fils fourrés, de manière à les protéger de la corrosion et améliorer, par ailleurs, le passage du courant de soudage entre le tube contact et le fil fourré, lors de la mise en oeuvre dudit fil fourré dans une opération subséquente de soudage à l'arc.

En outre, les tubes ou fils fourrés étanches peuvent être stockés plus facilement et plus longtemps, étant donné que le risque de reprise en humidité du contenu desdits tubes ou fils fourrés, c'est-à-dire des éléments de remplissage, est très faible compte-tenu de l'étanchéité desdits tubes, ce qui permet de garantir une très faible teneur en hydrogène diffusible du métal déposé et donc de minimiser les risques de fissuration à froid des joints soudés obtenus.

Il existe actuellement deux techniques industrielles permettant de fabriquer des fils fourrés étanches soudés.

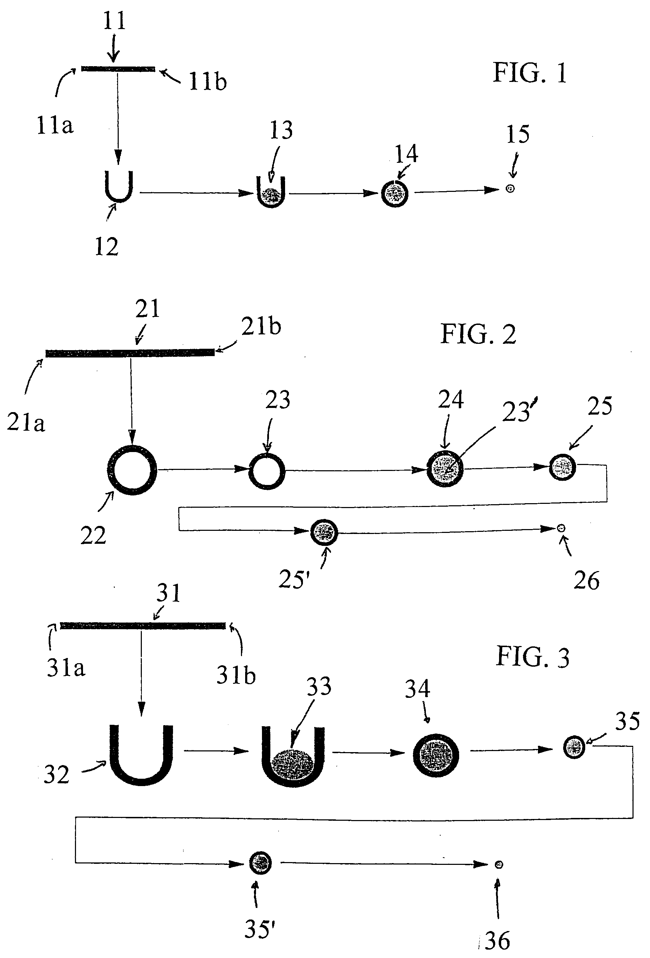

La première de ces techniques a été développée par la Société OERLIKON™ et est représentée sur la Figure 2. Selon cette technique, on confère à une feuille métallique, encore appelée feuillard, d'abord une forme de gouttière, encore appelée forme en "U", puis une forme cylindrique ou tubulaire, encore appelée forme en "O", par rapprochement des bords longitudinaux de ladite feuille métallique, l'un vers l'autre, de manière à obtenir un pré-tube ou pré-fil non-soudé.

Ensuite, les bords longitudinaux dudit pré-tube ou pré-fil sont unis l'un à l'autre par soudage, par exemples un soudage haute-fréquence ou multicathodes, de manière à obtenir un tube ou fil vide étanche, lequel peut être ensuite laminé et/ou tréfilé jusqu'à un diamètre prédéfini, en général fonction de la formule du fil fourré à fabriquer.

Le tube ou fil vide étanche ainsi obtenu est alors rempli d'éléments de remplissage par vibrations au moyen d'une table vibrante. Afin d'éviter une ségrégation des différents constituants ou éléments de remplissage, de par leurs différences de morphologies et de densités apparentes, les constituants sous forme agglomérée, tels les granulés, sont préférés.

Ensuite, le tube ou fil étanche rempli d'éléments de remplissage peut être laminé et/ou tréfilé jusqu'à un diamètre intermédiaire où il subit alors une opération de recuit de recristallisation nécessaire pour poursuivre sans rupture, le tréfilage dudit fil fourré jusqu'à son diamètre final. Enfin, le tube ou fil fourré ainsi obtenu peut éventuellement être soumis à un cuivrage extérieur ainsi que susmentionné.

Selon la deuxième technique de fabrication de tubes ou fils fourrés étanches, on confère, comme précédemment, une forme de gouttière ou forme en "U" à une feuille métallique.

A ce stade, des éléments de remplissage, sous forme granulaire et/ou pulvérulente, sont introduits directement dans la feuille métallique en forme de gouttière, à laquelle on confère ensuite une forme en "O" par rapprochement bord-à-bord jointifs de ses deux bords longitudinaux.

Le pré-tube ou pré-fil non-soudé rempli de flux de remplissage ainsi obtenu est alors soudé de manière à constituer un tube fourré étanche, lequel peut ensuite subir les opérations susmentionnées de tréfilage, laminage, recuit, tréfilage et/ou cuivrage, comme dans le cas précédent.

Des procédés de fabrication de fils fourrés connus sont notamment décrits dans les documents EP-A-589470, EP-A-158691, EP-A-812648 et EP-A-158693.

Cependant, quel que soit le type de tube ou fil fourré, à savoir étanche ou serti, et le procédé de fabrication utilisé pour le fabriquer, il s'avère que, lors de l'introduction du flux de remplissage dans le pré-tube en forme de gouttière ou dans le tube vide étanche, de l'air ambiant se trouve toujours emprisonné entre et/ou autour des éléments constituant le flux de remplissage, étant donné que ledit flux de remplissage n'est jamais compact dès le départ. En effet, c'est durant les étapes de laminage et/ou de trèfilage subséquents, que le flux de remplissage contenu dans le tube soudé ou serti se trouve fortement compacté.

Dans le cas d'un tube non-étanche, c'est-à-dire d'un tube serti, l'air atmosphérique, et donc en particulier l'azote qui s'y trouve, initialement présent entre lesdits constituants du flux de remplissage est évacué au travers du joint de sertissage longitudinal, lequel joint n'est jamais totalement étanche. Il s'ensuit que la teneur en azote du fil fourré résultant est alors approximativement égale à la somme des teneurs en azote des divers constituants du fil fourré, à savoir du flux de remplissage et de l'enveloppe externe, pondérée par leurs quantités respectives.

Par contre, dans le cas d'un tube soudé étanche, l'air atmosphérique emprisonné ne peut pas être évacué par le joint de soudure, lequel est étanche, c'est-à-dire imperméable à l'air, et l'air atmosphérique constitue dès lors, une matière première entrant involontairement dans la composition des éléments ou flux de remplissage.

Or, selon l'utilisation devant être faite subséquemment du tube ou fil fourré, la présence d'air peut être particulièrement préjudiciable pour la soudure à réaliser, étant donné qu'au moins une partie des gaz de l'air, en particulier l'azote vont se retrouver dans le métal déposé, c'est-à-dire le joint de soudure, et dégrader ses propriétés mécaniques.

Ainsi, il a été démontré que la présence d'azote dans le métal fondu diminue très significativement la ténacité du joint de soudure, en particulier dans le cas des aciers de construction à hautes caractéristiques mécaniques : aciers à hautes et/ou très haute limite d'élasticité, aciers thermomécaniques à refroidissement accéléré, aciers trempés-revenus.

Il est déjà connu d'évacuer l'air du tube. Par exemple, le document US-A-4,673,121 décrit un procédé de fabrication en continu d'une électrode de soudage tubulaire contenant une poudre, dans lequel l'air est évacué du tube vide, puis une poudre est introduite dans le tube en étant mélangée à un gaz protecteur. Selon ce procédé, la poudre contient un matériau inorganique poreux présentant une bonne aptitude à l'absorption de gaz.

EP-A-0136276 porte sur un procédé de fabrication en continu d'une électrode de soudage tubulaire à partir d'un pré-tube en forme de gouttière, dans lequel une poudre est introduite dans le pré-tube et les bords longitudinaux dudit pré-tube sont soudés l'un avec l'autre, le soudage étant effectué sous une atmosphère gazeuse de protection, par exemple du dioxyde de carbone.

L'abrégé japonais vol. 007, no. 269 (M-259), du 30 novembre 1983 & JP-A-58148096 concerne un procédé de fabrication de fil fourré de soudage, dans lequel l'azote contenu dans le fil est évacué par pompage sous-vide, puis le tube est rempli d'une poudre et puis d'argon ou de dioxyde de carbone.

Les abrégés japonais vol. 015, no. 463 (M-1183), du 25 novembre 1991, JP-A-03198997 & JP-A- 03198998 ont trait à un procédé de fabrication de fil fourré de soudage, dans lequel l'azote contenu dans le fil est éliminé au moyen d'un gaz inerte.

La présente invention vise donc à résoudre de façon encore plus efficace le problème d'emprisonnement intempestif et non souhaitable d'air atmosphérique dans les tubes soudés étanches remplis d'éléments de remplissage, tel les fils fourrés étanches de soudage et donc, par là-même, d'améliorer les propriétés mécaniques des joints de soudure réalisés par soudage au moyen de tels fils fourrés.

En d'autres termes, la présente invention a pour but de proposer, d'une part, un procédé de fabrication de tubes soudés étanches remplis d'éléments de remplissage, tels les fils fourrés étanches de soudage, permettant d'éviter ou de minimiser la quantité de certaines des impuretés ou éléments nocifs contenus dans l'air atmosphérique emprisonné dans les tubes eux-mêmes et/ou dans les flux de remplissage qui y sont introduits, et, d'autre part, des fils fourrés soudés étanches contenant des proportions d'impuretés gazeuses nocives, en particulier d'azote gazeux, nettement inférieures à celles contenues dans les fils fourrés de l'art antérieur.

La présente invention concerne alors, selon un premier aspect, un procédé de fabrication d'au moins un tube métallique soudé étanche contenant des éléments de remplissage selon la revendication 1.

En d'autres termes, la présente invention repose sur la mise en contact des éléments de remplissage avec une atmosphère pauvre ou appauvrie en composés atmosphériques gazeux néfastes, tel en particulier l'azote atmosphérique et/ou l'humidité.

Selon le cas, le procédé de fabrication selon l'invention peut comprendre l'une ou plusieurs des caractéristiques suivantes :
- l'atmosphère gazeuse de protection est à température ambiante,
- la pression partielle d'azote dans ladite atmosphère gazeuse est d'au plus 0,77.10⁵ Pa, de préférence d'au plus 0,3.10⁵ Pa, préférentiellement encore d'au plus 0,2.10⁵ Pa. l'atmosphère gazeuse de protection comprend essentiellement au
- la mise en contact des éléments de remplissage avec ladite atmosphère gazeuse de protection est réalisée avant, pendant et/ou après introduction desdits éléments de remplissage dans ledit tube étanche soudé ou dans ledit pré-tube.
- les éléments de remplissage sont introduits en une ou plusieurs couches superposées dans ledit pré-tube.
- au moins l'introduction des éléments de remplissage est effectuée sous balayage gazeux avec ladite atmosphère gazeuse de protection.
- l'introduction des éléments de remplissage débute après élimination d'au moins une partie de l'air atmosphérique contenu dans au moins une partie dudit pré-tube ou dudit tube, ladite élimination de l'air atmosphérique étant effectuée par mise en oeuvre d'un balayage gazeux avec ladite atmosphère gazeuse de protection et/ou une mise en dépression d'au moins une partie dudit tube ou pré-tube.
- il comprend, en outre, au moins une étape de soudage d'au moins une partie d'un pré-tube, de manière à obtenir un tube soudé étanche, et/ou au moins une étape de récupération, recyclage et/ou purification d'au moins une partie de ladite atmosphère gazeuse de protection.

Selon un autre aspect, l'invention concerne également un fil fourré étanche, c'est-à-dire un fil fourré dont les deux bords longitudinaux sont réunis par soudage l'un avec l'autre, susceptible d'être obtenu par un procédé de fabrication susmentionné, notamment un fil fourré étanche comprenant au moins une enveloppe métallique et un flux de remplissage contenant des éléments de remplissage, le fil fourré contenant une proportion totale d'azote inférieure à 100 ppm, de préférence inférieure à 80 ppm, de préférence inférieure à 70 ppm, de préférence inférieure à 60 ppm, de préférence inférieure à 55 ppm et, de préférence inférieure à 50 ppm. Par proportion totale d'azote, on entend la somme des quantités d'azote gazeux et non-gazeux contenues ou incorporées dans le fil fourré.

Avantageusement, la proportion totale d'azote contenue dans l'enveloppe métallique et dans ledit flux de remplissage dudit fil fourré est égale à au moins 60% environ de la proportion totale d'azote contenu dans ledit fil, de préférence à au moins 70% environ.

De préférence, le fil fourré étanche est substantiellement exempt d'azote gazeux, de préférence totalement exempt d'azote gazeux.

Selon le cas, le fil fourré étanche contient des molécules d'azote gazeux et d'au moins un deuxième gaz, la proportion de molécules dudit deuxième gaz dans le fil fourré étant supérieure à la proportion de molécules d'azote gazeux dans ledit fil fourré.

Préférentiellement, le deuxième gaz est choisi parmi l'argon, le dioxyde de carbone, l'oxygène et l'hélium, de préférence le deuxième gaz est l'argon ou le dioxyde de carbone.

Selon un autre mode de réalisation, le fil fourré étanche contient des molécules d'azote gazeux et des molécules d'oxygène gazeux, le rapport de la proportion de molécules d'azote gazeux dans le fil fourré à la proportion de molécules d'oxygène gazeux dans ledit fil fourré étant inférieur à 4, de préférence inférieur à 3.5, de préférence inférieur à 2.5.

En outre, l'invention concerne aussi un procédé de soudage à l'arc dans lequel on utilise un fil fourré étanche selon l'invention, de préférence un procédé de soudage à l'arc choisi parmi les procédés de soudage TIG (Tungsten Inert Gas), MIG (Metal Inert Gas), MAG (Metal Active Gas) et à l'arc submergé, et d'un cordon de soudure susceptible d'être obtenu par mise en oeuvre d'un tel procédé de soudage à l'arc, lequel cordon de soudure est caractérisé en ce qu'il contient moins de 60 ppm d'azote, préférentiellement encore moins de 50 ppm d'azote. Par cordon de soudure, on entend le métal déposé, de préférence refroidi, obtenu par fusion d'au moins une partie dudit fil fourré.

Le procédé selon d'invention prévoit de récupérer, recycler et/ou purifier l'atmosphère gazeuse de protection ce qui permet d'utiliser une quantité moindre de gaz et donc de diminuer les coûts globaux du procédé de fabrication. La purification de ladite atmosphère gazeuse en ses impuretés peut se faire par des moyens connus de l'homme de l'art, par exemple au moyen de modules membranaires, d'adsorbants et/ou de catalyseurs adéquats, tels ceux utilisés notamment dans les procédés de purification de gaz, par exemple de purification de l'air avant distillation cryogénique.

En outre, le gaz ou le mélange gazeux constituant l'atmosphère gazeuse de protection mis en oeuvre dans le cadre de la présente invention peut être issu de toute source de gaz connue de l'homme de l'art, c'est-à-dire un conditionnement (bouteille de gaz, capacité de stockage......) ou une canalisation, ou alors une source de production de gaz pouvant être située sur le site même de fabrication, par exemple une unité de production de type PSA (pour pressure swing adsorption), une unité à modules membranaires, ou tout autre unité de séparation de gaz par voie cryogénique ou non-cryogénique connue de l'homme de l'art.

L'invention va maintenant être décrite plus en détail à l'aide d'exemples comparatifs et de schémas, donnés à titre illustratif, mais non limitatif.

La figure 1 représente un schéma d'un procédé de fabrication par sertissage de fils fourrés non-étanches de l'art antérieur. Ce procédé de fabrication par sertissage comprend 4 étapes principales :
- étape 1 : on confère à une feuille métallique 11, schématisée en coupe transversale, une forme de gouttière 12, encore appelée forme en "U", par rapprochement des bords longitudinaux 11a et 11b de ladite feuille 11 métallique, l'un vers l'autre;
- étape 2 : on introduit dans ladite gouttière 12 des éléments de remplissage 13;
- étape 3 : on poursuit le rapprochement des bords 11a et 11b, l'un vers l'autre, de manière à obtenir un pré-tube de forme cylindrique ou tubulaire, encore appelée forme en "O" et on réunit ensuite par sertissage les bords 11a et 11b, l'un à l'autre, de manière à obtenir un tube non-étanche 14 contenant des éléments de remplissage:
- étape 4 : on réalise un tréfilage du tube non-étanche 14 jusqu'au diamètre final 15 souhaité.

Ce procédé de fabrication est réalisé, dans son intégralité, à l'air atmosphérique et à pression atmosphérique.

La figure 2 représente un schéma d'un procédé de fabrication connu de tubes ou fils fourrés soudés étanches selon la technique OERLIKON™, lequel comprend 6 étapes principales :
- étape 1 : on confère à une feuille métallique 21, schématisée en coupe transversale, une forme cylindrique ou tubulaire (forme en "O") par rapprochement bout-à-bout jointifs des bords longitudinaux 21a et 21b de la feuille 21 et on soude ensemble les deux bords 21a et 21b, de manière à obtenir un tube soudé 22 étanche et vide;
- étape 2 : on opère un laminage du tube soudé vide 22 jusqu'au diamètre intermédiaire de remplissage 23;
- étape 3 : on introduit des éléments de remplissage 23' dans le tube issu de l'étape 2, par vibrations au moyen d'une table de remplissage vibrante, de manière à obtenir un tube étanche 24 contenant des éléments de remplissage 23', par exemple un fil fourré:
- étape 4 : on réalise un laminage et/ou un tréfilage du tube 24 étanche jusqu'à un autre diamètre 25 souhaité;
- étape 5 : on soumet le tube étanche issu de l'étape 4 à un recuit de recristallisation;
- étape 6 : on réalise un tréfilage et éventuellement un cuivrage du tube étanche 25', après recuit, pour obtenir le tube ou fil fourré définitif 26.

Ce procédé de fabrication selon la technique OERLIKON™ est aussi réalisé, dans son intégralité, à l'air atmosphérique et à pression atmosphérique.

La figure 3 représente un schéma d'un procédé de fabrication connu de tubes ou fils fourrés soudés étanches selon une technique alternative à la technique OERLIKON™, lequel comprend 6 étapes principales :
- étape 1 : on confère à une feuille métallique 31, schématisée en coupe transversale, une forme de gouttière 32 par rapprochement des bords longitudinaux 31a et 31b de la feuille 31 métallique, l'un vers l'autre;
- étape 2 : on introduit des éléments de remplissage 33 dans la gouttière 32;
- étape 3 : on poursuit le rapprochement des bords 31a et 31b, de manière à obtenir d'abord un pré-tube en "O" et on soude ensemble lesdits deux bords, de manière à obtenir un tube soudé 34 étanche contenant des éléments de remplissage 33;
- étape 4 : on réalise un laminage et/ou un tréfilage du tube 34 étanche jusqu'à un autre diamètre inférieur 35;
- étape 5 : on soumet le tube étanche issu de l'étape 4 à un recuit de recristallisation;
- étape 6 : on réalise un tréfilage et éventuellement un cuivrage du tube étanche 35', après recuit, pour obtenir le tube ou fil fourré définitif 36.

Ce procédé de fabrication est aussi réalisé, dans son intégralité, à l'air atmosphérique et à pression atmosphérique.

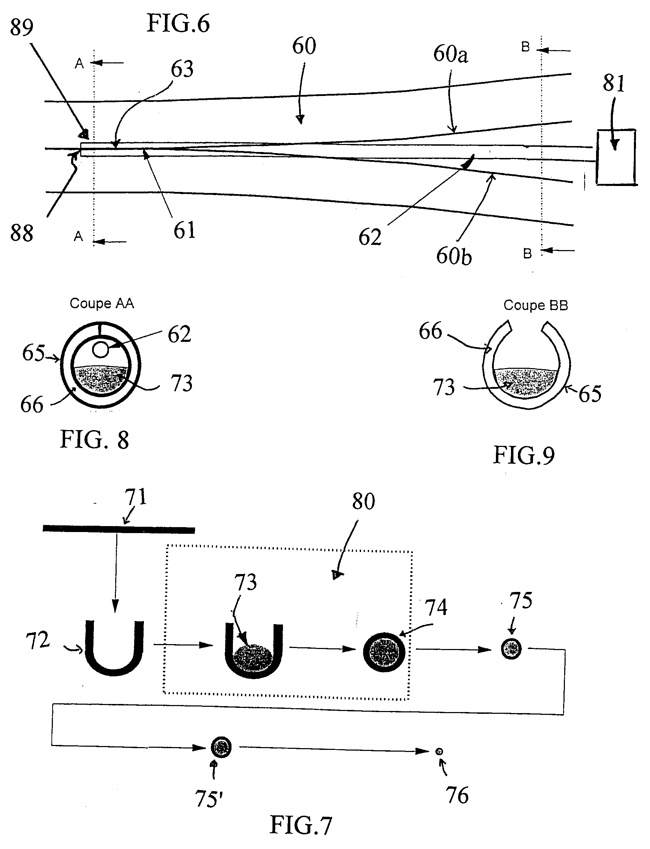

La figure 7 représente, quant à elle, un schéma d'un premier mode de réalisation d'un procédé de fabrication selon la présente invention de tubes ou fils fourrés soudés étanches, à partir d'une feuille métallique 71, schématisée en coupe transversale, à laquelle on confère d'abord une forme de gouttière 72 en "U" comme expliqué ci-avant.

On introduit ensuite des éléments de remplissage 73 dans la gouttière 72, ladite introduction étant réalisée dans une zone inertée 80, c'est-à-dire dans une zone où l'atmosphère gazeuse est controlée, de manière à éviter et/ou minimiser tout contact et/ou introduction de polluants gazeux indésirables, tels l'azote, l'hydrogène et/ou la vapeur d'eau, dans le tube et/ou au contact et/ou dans les éléments de remplissage 73, tel un flux de remplissage pour fils fourrés.

Après remplissage, on poursuit le rapprochement des bords de la feuille 71, de manière à obtenir un pré-tube en "O" contenant de la poudre, et on soude ensuite ensemble lesdits deux bords, de manière à obtenir un tube soudé 74 étanche rempli d'éléments de remplissage 73.

Le soudage du joint longitudinal du tube est réalisé, comme le remplissage, dans la zone inertée 80, par exemple au moyen d'un capotage dans lequel est introduit un flux gazeux de protection, tel un flux d'argon ou de CO₂, ou un mélange Ar/CO₂, Ar/O₂ ou Ar/CO₂/O₂, substantiellement exempt d'impuretés ou ne contenant qu'une proportion faible d'impuretés, par exemple au plus quelques %, ppm ou ppb d'azote, d'hydrogène et/ou de vapeur d'eau.

Selon le cas, la zone inertée 80 peut également être une zone mise sous vide au moins partiel afin d'en extraire au moins une partie des impuretés, notamment azote, hydrogène et/ou humidité, qu'elle contient, laquelle est soit au moins partiellement représsurisée avec un flux de gaz protecteur, tel l'argon.

Il est également possible d'utiliser en tant que gaz protecteur, de l'air purifié, c'est-à-dire de l'air dont on a préalablement éliminé les impuretés néfastes à la réalisation d'un fil fourré selon l'invention qu'il contient, tel l'azote, l'hydrogène et/ou l'humidité; ceci peut être fait par des techniques de purification connues de l'homme du métier.

Après cela, on réalise un laminage et/ou un tréfilage du tube 74 soudé étanche et rempli d'éléments de remplissage jusqu'à un diamètre inférieur 75 intermédiaire.

Ensuite, on soumet éventuellement le tube étanche 75 issu de l'étape 4 à un recuit de recristallisation et, après recuit, on peut réaliser un autre tréfilage et éventuellement un cuivrage du tube étanche 75' pour obtenir le tube ou fil fourré définitif 76.

Il apparaît que, contrairement aux procédés de fabrication connus de l'art antérieur, notamment les procédés représentés sur les figures 1 à 3, le procédé de fabrication selon la présente invention met en oeuvre une atmosphère gazeuse de protection dont les caractéristiques physicochimiques sont soigneusement contrôlées au sein de la zone inertée 80, tel un capotage de protection, de manière à éviter ou minimiser toute incorporation néfaste d'impuretés gazeuses, en particulier l'azote atmosphérique, dans les tubes étanches ainsi fabriqués, tel les fils fourrés de soudage.

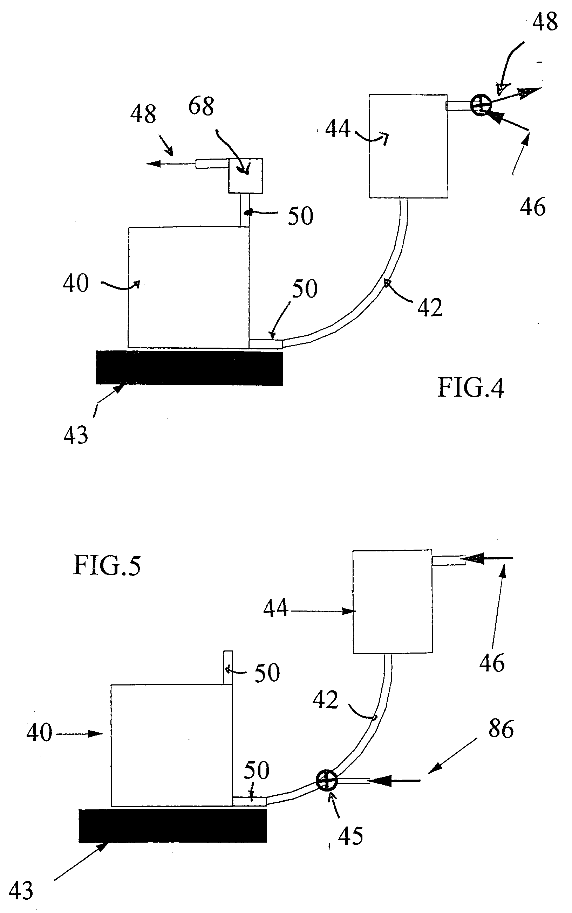

Les figures 4 et 5 représentent, des schémas de deux installations de fabrication d'un tube métallique, ici un fil 50 fourré étanche de soudage, à partir d'un tube étanche vide, dans lequel sont introduits des éléments de remplissage, ici un flux de remplissage, par le biais de moyens de remplissage comportant des moyens de jonction, telle une canalisation 42, et une trémie 44 ou réservoir de flux de remplissage, permettant l'introduction dudit flux de remplissage dans ledit fil 50 enroulé sur une bobine 40.

Selon le mode de réalisation de la Figure 4, un vide au moins partiel est réalisé à l'intérieur du fil 50 préalablement à l'introduction du flux de remplissage dans celui-ci, de façon à extraire du fil étanche au moins une partie des molécules de composés gazeux indésirables qui s'y trouvent, principalement l'azote atmosphérique.

La mise sous-vide est effectuée par au moins l'une mais, de préférence, les deux extrémités du fil 50, par le biais de moyens 48 de mise sous vide (non-détaillés) de type classique, comprenant notamment une ou des pompes à vide, des vannes, des canalisations de gaz, des joints d'étanchéité, un réservoir 68 pour récupérer l'excès de poudres en sortie du tube 50...

Avantageusement, on effectue aussi, au moins temporairement, une mise sous vide au moins partiel de la trémie ou réservoir 44 contenant le flux de remplissage et/ou de la canalisation 42, de manière à les purger d'une partie au moins de l'air atmosphérique qui s'y trouve, avant le début du remplissage du fil 50.

Après mise sous-vide, le remplissage du fil soudé étanche 50 est réalisé par vibrations, de manière connue, le vide étant maintenu pendant au moins une partie de cette opération. En fin de remplissage, le pompage ou mise sous vide réalisé par le biais des moyens de pompage 48 est arrêté et on rétablit progressivement la pression en introduisant le gaz de protection choisi, par exemple de l'argon, via la vanne 46, jusqu'à ce qu'on atteigne la pression atmosphérique notamment au niveau du réservoir 68 de récupération de l'excès de poudre.

Toutefois, il est également possible de procéder de manière inverse, c'est-à-dire en commençant par réintroduire le gaz de protection au niveau du réservoir 68, voire même, à la fois au niveau de la vanne 46 et du réservoir 68.

Selon un autre mode de réalisation, après la mise sous vide, un gaz de remplissage, tel un flux d'argon, est introduit par la vanne 46 dans la trémie 44, ledit gaz de remplissage permettant d'assurer la réalisation et le maintien d'une atmosphère gazeuse de protection dans la trémie ou réservoir 44, la canalisation 42 et/ou dans le fil 50 soudé étanche et, par ailleurs, de favoriser le remplissage du fil 50 avec le flux de remplissage en favorisant l'acheminement dudit flux de remplissage de la trémie 44 au fil 50 par le biais de la canalisation 42.

En outre, la circulation et la répartition du flux de remplissage dans le fil 50 sont assurées, de manière connue de l'homme de l'art, par une table vibrante 43 sur laquelle est installée la bobine 40.

Le mode de réalisation de la Figure 5 est analogue à celui de la Figure 4, à l'exception du fait que, dans ce cas, la mise sous vide partiel est remplacée par une purge, préalablement à tout remplissage du fil 50, de l'air se trouvant à l'intérieur de la trémie 44, de la canalisation 42 et du fil 50.

Cette purge est effectué en assurant un balayage gazeux de ceux-ci par un gaz de protection, c'est-à-dire un flux gazeux de composition contrôlée, tel un flux d'argon et/ou de dioxyde de carbone, ledit gaz de protection étant introduit 46, 86 (non détaillé) au niveau de la trémie 44 et/ou au niveau de la canalisation 42 via la vanne 45.

Après élimination de tout ou partie de l'air emprisonné, en particulier dans le fil 50, on procède à un remplissage du fil 50 par les éléments de remplissage et sous atmosphère gazeuse de protection, comme dans le cas précédent.

La figure 6 représente une autre installation de fabrication industrielle et en continu, dans lequel une partie du fil 60 est soumis à un balayage gazeux de protection avec un gaz exempt d'azote, tel un flux d'argon.

Selon ce mode de réalisation, le fil fourré 60 est fabriqué en continu, c'est-à-dire que le fil 60 est animé d'une vitesse non nulle selon un mouvement de translation, l'entraînement du fil 60 étant réalisé, de manière classique, au moyen de galets d'entraînement ou analogues, par exemples (non détaillés ici).

Préférentiellement, le remplissage du fil 60 avec le flux de remplissage et/ou le soudage étanche des deux bords longitudinaux 60a et 60b du fil 60 sont réalisés sous une atmosphère ayant une teneur en azote contrôlée, préférentiellement exempte d'azote, afin d'éviter ou de minimiser la quantité d'azote incorporée dans ledit fil fourré.

Pour ce faire, un ou des injecteurs de gaz 62 sont agencés de manière à envoyer un gaz de protection, tel l'argon, au-dessus du flux de remplissage, à l'intérieur du fil fourré 60 soudé et/ou aux environs de la zone de soudage 61 afin d'y créer une atmosphère gazeuse de protection. Plus précisément, cette injection de gaz protecteur est réalisée, par l'extrémité aval 88 de l'injecteur 62, au niveau de la zone d'injection 89 située à l'intérieur du tube 60 en aval de la zone de soudage 61 dudit tube 60; l'injecteur 62 étant alimenté en argon par des moyens de fourniture 81 de gaz de type classique (non détaillés) pouvant comprendre des canalisations de gaz, des joints d'étanchéité, un réservoir de stockage...

De préférence, l'injecteur 62 et les moyens de soudage sont fixes, alors que le tube 60 se déplace en translation, de manière à ce que les différentes étapes (formage en "U", puis en "O", soudage...) conduisant à la formation du fil fourré étanche soient réalisées en continu.

Les figures 8 et 9 représentent, respectivement, des vues en coupes transversales de la figure 6 au niveau des lignes AA et BB.

Plus précisément, la figure 9 représente une vue du fil en forme de "U", après introduction des éléments de remplissage 73 et avant soudage des bords longitudinaux de la feuille métallique 66, l'un avec l'autre, et la figure 8 représente une vue du fil 60 après introduction des éléments de remplissage 73 et après soudage des bords longitudinaux de la feuille métallique 66, de manière à obtenir un fil fourré étanche 65. Sur cette figure 8, on voit clairement que l'introduction du gaz protecteur, tel l'argon, par l'extrémité aval 88 de l'injecteur 62 est réalisée à l'intérieur du fil soudé, de manière à chasser dudit fil fourré l'air et donc les impuretés qui s'y trouvent, en particulier l'azote atmosphérique. On obtient ainsi un fil fourré conforme à la présente invention, c'est-à-dire ne contenant substantiellement pas d'azote atmosphérique ou d'autres impuretés indésirables.

Le procédé de fabrication de la figure 6 est un procédé en continu, dans lequel le fil 60 est soumis à un mouvement de translation par des moyens d'entraînement de type connu permettant une production de fil fourré à l'échelle industrielle.

### Exemples

Afin de valider le procédé de fabrication selon l'invention et les propriétés des fils fourrés étanche ainsi obtenus, différents essais ont été réalisés et sont consignés dans les exemples ci-après.

### Exemple 1

Un même mélange de poudres granulées constituant les éléments de remplissage ou flux de remplissage a été utilisé pour fabriquer, d'une part, un fil fourré serti (FF1A) au moyen du procédé de la figure 1 et, d'autre part, un fil fourré soudé étanche (FF1B) au moyen du procédé de la figure 2 (technique Oerlikon). Ce mélange de poudres comprend du rutile (TiO₂) en tant que composé majoritaire, des éléments formateurs de laitiers, tel Al₂O₃ et ZrSiO₄, des éléments d'alliage, tels ceux du type Fe-Mn ou Si-Mn, et des éléments désoxydants, tel Al, Al-Mg...

Le taux de remplissage ou rapport poids flux/poids fil est, dans les deux cas, de 15% environ.

En outre, les teneurs en azote des feuilles métalliques ou feuillards constituant l'enveloppe externe de ces deux fils fourrés et les teneurs totales en azote des fils fourrés ainsi obtenus ont été déterminées par extraction à haute température à l'aide d'un analyseur de type ON-MAT 8500 commercialisé par la société STRÖHLEIN. Les résultats de ces analyses sont donnés dans le tableau I ci-après.

**Tableau I**

| Essai | Feuillard fil serti | FF1A | Ecart fil/feuillard | Feuillard fil soudé | FF1B | Ecart fil/feuillard |
|---|---|---|---|---|---|---|
| Teneur en azote (ppm) | 19 | 63 | 44 | 29 | 130 | 101 |

Il apparaît que l'écart entre la teneur en azote du fil et la teneur en azote du feuillard est environ 2.5 fois plus grand pour un fil fourré soudé étanche (FF1B) fabriqué par un procédé classique que pour un fil fourré serti (FF1A), alors que le flux de remplissage et le taux de remplissage mis en oeuvre sont identiques.

En d'autres termes, ces résultats confirment que l'incorporation d'azote dans les fils fourrés étanches fabriqués par les procédés classiques se fait non seulement par le biais des matières premières utilisées, à savoir le flux et le feuillard, mais aussi et surtout par le biais de l'air atmosphérique ambiant emprisonné dans lesdits fils.

Il est à noter que, le problème de la présence d'azote gazeux atmosphérique se pose essentiellement pour les fils fourrés soudés étanches, étant donné que les fils fourrés sertis ne sont pas étanches et autorisent donc un dégazage tout au long leur processus de fabrication (tréfilage, laminage....).

### Exemple 2

Le flux de remplissage de l'exemple 1 a été utilisé, comme précédemment, pour fabriquer, d'une part, un fil fourré serti (FF2A), comme dans l'exemple 1, au moyen du procédé de la figure 1 et, d'autre part, un fil fourré soudé étanche (FF2B) au moyen du procédé de la figure 3.

Le taux de remplissage ou rapport poids flux/poids fil est, dans les deux cas, de 16.2 % environ.

En outre, les teneurs en azote des feuillards de ces deux fils fourrés et les teneurs totales en azote des fils fourrés ainsi obtenus ont été déterminées comme dans l'exemple 1.

Les résultats de ces analyses sont donnés dans le tableau II ci-après.

**Tableau II**

| Essai | Feuillard fil serti | FF2A | Ecart fil/feuillard | Feuillard fil soudé | FF2B | Ecart fil/feuillard |
|---|---|---|---|---|---|---|
| Teneur en azote (ppm) | 19 | 65 | 46 | 40 | 112 | 72 |

Les résultats obtenus sont analogues à ceux de l'exemple 1 et confirment l'incorporation d'une quantité importante d'azote présent dans l'air atmosphérique dans les fils fourrés étanches fabriqués selon les procédés de l'art antérieur.

### Exemple 3

Dans cet exemple, deux fils fourrés soudés étanches ont été fabriqués avec un même feuillard, un même flux et au même taux de remplissage d'environ 15%.

Le premier fil fourré (FF3A) a été rempli de flux par vibration selon la technique Oerlikon classique présentée sur la figure 2.

Le deuxième fil fourré (FF3B) a également été rempli de flux par vibration. Toutefois, préalablement à son remplissage, l'intérieur de ce deuxième fil fourré, la trémie contenant les poudres de remplissage et les moyens d'amenée (canalisations...) reliant ladite trémie à l'intérieur dudit fil fourré ont été soumis successivement à une mise en dépression, c'est-à-dire à une mise sous vide, afin d'en extraire la majeure partie de l'air atmosphérique (donc de l'azote) qui s'y trouvait, puis soumis à un balayage de purge par un flux d'argon introduit au niveau de la trémie, ainsi que schématisé sur la figure 4, c'est-à-dire conformément à la présente invention.

En outre, les teneurs totales en azote des fils fourrés ainsi obtenus ont été déterminées comme dans l'exemple 1 et les résultats sont donnés dans le tableau III ci-après.

**Tableau III**

| Fil fourré étanche n° | FF3A | FF3B |
|---|---|---|
| Teneur en azote (ppm) | 116 | 68 |

### Exemple 4

Dans cet exemple, trois fils fourrés soudés étanches ont été fabriqués avec un même feuillard, un même flux et au même taux de remplissage d'environ 15%.

Le premier fil fourré (FF4A) a été rempli de flux par vibration selon la technique Oerlikon classique présentée sur la figure 2.

Le deuxième fil fourré (FF4B) a été rempli de flux par vibration, de manière analogue au fil fourré n°FF3B de l'exemple 3, c'est-à-dire en soumettant le fil vide étanche à une mise en dépression suivie d'un balayage de purge par un flux d'argon, conformément à la présente invention.

Le troisième fil fourré (FF4C) a été rempli comme le deuxième fil fourré (FF4B), mais avec balayage de purge par un flux de dioxyde de carbone (CO₂), conformément à la présente invention.

En outre, les teneurs en azote des fils fourrés ainsi obtenus ont été déterminées et les résultats sont donnés dans le tableau IV ci-après.

**Tableau IV**

| Fil fourré n° | FF4A | FF4B | FF4C |
|---|---|---|---|
| Teneur en azote (ppm) | 130 | 70 | 72 |

Les résultats obtenus dans les exemples 3 et 4 montrent clairement que le remplacement de l'atmosphère ambiante, c'est-à-dire de l'air ambiant à la pression atmosphérique, par une atmosphère gazeuse à teneur en azote contrôlée (argon ou CO₂) permet d'abaisser la teneur totale en azote des fils fourrés d'environ 40%.

### Exemple 5

Dans cet exemple, deux fils fourrés soudés étanches ont été fabriqués avec le même feuillard, le même flux et au même taux de remplissage que ceux de l'exemple 2 ci-avant.

Le premier fil fourré (FF5A) a été fabriqué en injectant de l'argon gazeux dans le tube au-dessus des éléments de remplissage au niveau de la zone de soudage afin de minimiser la quantité d'air atmosphérique emprisonnée dans le tube après soudage étanche, ainsi que schématisé sur les figures 6, 8 et 9.

Le deuxième fil fourré (FF5B) a été fabriqué en injectant de l'argon gazeux dans une zone inertée ou caisson d'inertage entourant la machine de formage/remplissage/soudage, depuis la zone de remplissage jusqu'à la zone de soudage du tube, ainsi que schématisé sur la figure 7.

En outre, les teneurs en azote des fils fourrés ainsi obtenus ont été déterminées et les résultats sont donnés dans le tableau V ci-après; à titre comparatif, la teneur en azote du fil fourré soudé (FF2B) de l'exemple 2 est également donnée.

**Tableau V**

| Fil fourré n° | FF2B | FF5A | FF5B |
|---|---|---|---|
| Teneur en azote (ppm) | 112 | 75 | 60 |

Les résultats obtenus confirment que le remplacement de l'atmosphère ambiante, c'est-à-dire de l'air ambiant à la pression atmosphérique, par une atmosphère gazeuse à teneur en azote contrôlée (argon) permet d'abaisser la teneur totale en azote des fils fourrés étanches.

### Exemple 6

Cet exemple vise à comparer la qualité des soudures obtenues lorsqu'on utilise un fil fourré selon l'art antérieur ou, le cas échéant, un fil fourré selon la présente invention dans une opération de soudage à l'arc.

Pour ce faire, des joints de soudures ont été réalisés avec les fils fourrés FF4A (fabriqué de manière classique) et FF4B (fabriqué selon l'invention) de l'exemple 4 ci-avant.

Ensuite, la teneur en azote du métal déposé constituant le joint de soudure et les caractéristiques de résilience ont été déterminées; les résultats obtenus sont consignés dans le tableau VI ci-après.

**Tableau VI**

| Joint de soudure obtenu avec le fil fourré n° | FF4A | FF4B |
|---|---|---|
| Teneur en azote de la soudure (en ppm) | 91 | 36 |
| Résilience Kv à -20°C (en J) | 31 | 60 |

### Exemple 7

Cet exemple 7 est analogue à l'exemple 6 et vise donc également à comparer la qualité des soudures obtenues avec un fil fourré selon l'art antérieur ou, le cas échéant, avec un fil fourré selon la présente invention.

Pour ce faire, des joints de soudures ont été réalisés avec les fils fourrés FF7A fabriqué de manière classique selon le procédé de la figure 2 ci-avant, et FF7B et FF7C fabriqués selon l'invention. Plus précisément, le fil fourré FF7B a été fabriqué sous un balayage gazeux d'argon sans mise sous vide préalable, alors que le fil fourré FF7C a été fabriqué sous un balayage gazeux d'argon avec mise sous vide préalable, comme expliqué ci-avant.

Ensuite, la teneur en azote des 3 fils fourrés, du métal déposé et les caractéristiques de résilience ont été déterminées et les résultats consignés dans le tableau VII ci-après.

**Tableau VII**

| Joint de soudure obtenu avec le fil fourré n° | FF7A | FF7B | FF7C |
|---|---|---|---|
| Teneur en azote du fil fourré (en ppm) | 118 | 69 | 68 |
| Teneur en azote de la soudure (en ppm) | 84 | 35 | 36 |
| Résilience Kv à -20°C (en J) | 50 | 111 | 108 |

Les résultats obtenus dans les exemples 4 à 7 montrent clairement que les fils fourrés étanches contenant moins de 80 ppm d'azote, c'est-à-dire les fils fourrés gazeux fabriqués par le procédé de fabrication selon la présente invention, permettent d'obtenir des joints de soudure de meilleure qualité (plus faible incorporation d'azote dans le métal déposé et résilience plus élevée) que les fils fourrés fabriqués selon les techniques classiques, c'est-à-dire les fils fourrés contenant habituellement plus de 100 ppm d'azote gazeux.

### Exemple 8

Cet exemple 8 est similaire aux exemples précédents. Deux fils fourrés soudés étanches FF8A et FF8B de type "Metal Cored" ont été fabriqués selon le procédé de la figure 2 (technique Oerlikon) avec un même mélange de poudres granulées (voir exemple 1) et avec un même feuillard.

Plus précisément, le fil fourré FF8A est conforme à l'art antérieur alors que le fil fourré FF8B est selon le procédé de la présente invention, c'est-à-dire que le fil fourré FF8B a été rempli de flux de remplissage par vibrations et en appliquant une mise sous vide primaire avant et pendant le remplissage proprement-dit, à la fois de l'intérieur du tube, de la trémie contenant le flux de remplissage et des moyens de jonction acheminant le flux de remplissage depuis la trémie jusque dans le fil fourré étanche, suivi d'une remise progressive sous pression à l'aide d'argon introduit au niveau de la trémie, comme expliqué ci-avant.

Le taux de remplissage est, dans les deux cas, de 12% environ.

Ensuite, ces deux fils fourrés ont servi à réaliser des cordons de soudure pour déterminer la teneur en hydrogène diffusible selon la norme ISO 3690. Les résultats sont consignés dans le tableau VIII ci-après.

**Tableau VIII**

| Fil fourré n° | FF8A | FF8B |
|---|---|---|
| Teneur en H₂ diffusible (en ml/100g de métal déposé) | 6.5 | 3.5 |

Il ressort du tableau VIII que le fil fourré fabriqué conformément à l'invention conduit à une teneur en hydrogène diffusible diminuée d'environ 46% par rapport à un fil fourré de l'art antérieur.

Il s'ensuit qu'une soudure réalisée avec un fil fourré selon l'invention présente de meilleures caractéristiques de résistance, en particulier, une telle soudure présente un risque de fissuration à froid beaucoup plus faible lors du soudage des aciers de construction, notamment à haute ou très haute limité d'élasticité.

## Revendications

1. Procédé de fabrication d'au moins un tube métallique soudé étanche contenant des éléments de remplissage et une proportion totale en azote inférieure à 100 ppm, à partir d'au moins une feuille métallique au moins partiellement formée en un tube étanche soudé ou en un pré-tube ayant sensiblement une forme de gouttière, dans lequel tube ou pré-tube sont introduits des éléments de remplissage, lequel procédé comprend au moins une mise en contact, au moins pendant ou après introduction desdits éléments de remplissage dans ledit tube ou pré-tube, desdits éléments de remplissage avec une atmosphère gazeuse de protection comprenant plusieurs composés gazeux pour chacun desquels on contrôle au moins l'un des paramètres choisis parmi la nature desdits composés gazeux la proportion desdits composés gazeux, la pression desdits composés gazeux et le débit desdits composés gazeux,
lesdits composés gazeux étant choisis parmi l'azote, l'hydrogène et la vapeur d'eau;
et l'atmosphère gazeuse de protection comprenant essentiellement au moins un gaz choisi parmi l'argon, l'hélium, le dioxyde de carbone, l'oxygène et leurs mélanges;
à l'exception d'un procédé de fabrication dans lequel l'atmosphère gazeuse est constituée d'air atmosphérique à la pression atmosphérique.

2. Procédé de fabrication selon la revendication 1, caractérisé en ce qu'un des composés gazeux est l'azote.

3. Procédé de fabrication selon l'une des revendications 1 ou 2, caractérisé en ce que la pression partielle d'azote dans ladite atmosphère gazeuse est d'au plus 0,77.10⁵ Pa, de préférence d'au plus 0,2.10⁵ Pa.

4. Procédé de fabrication selon l'une des revendications 1 à 3, caractérisé en ce que lesdits composés dont on contrôle au moins l'un des paramètres sont l'azote, l'hydrogène et la vapeur d'eau.

5. Procédé de fabrication selon l'une des revendications 1 à 4, caractérisé en ce que la mise en contact des éléments de remplissage avec ladite atmosphère gazeuse de protection est réalisée avant, pendant et/ou après introduction desdits éléments de remplissage dans ledit tube étanche soudé ou dans ledit pré-tube.

6. Procédé de fabrication selon l'une des revendications 1 à 5, caractérisé en ce qu'au moins l'introduction des éléments de remplissage est effectuée sous balayage gazeux avec ladite atmosphère gazeuse de protection.

7. Procédé de fabrication selon l'une des revendications 1 à 6, caractérisé en ce que l'introduction des éléments de remplissage débute après élimination d'au moins une partie de l'air atmosphérique contenu dans au moins une partie dudit pré-tube ou dudit tube, ladite élimination de l'air atmosphérique étant effectuée par mise en oeuvre d'un balayage gazeux avec ladite atmosphère gazeuse de protection et/ou d'une mise en dépression d'au moins une partie dudit tube ou pré-tube.

8. Procédé de fabrication selon l'une des revendications 1 à 7, caractérisé en ce qu'il comprend, en outre, au moins une étape de soudage d'au moins une partie d'un pré-tube, de manière à obtenir un tube soudé étanche, et/ou au moins une étape de récupération, recyclage et/ou purification d'au moins une partie de ladite atmosphère gazeuse de protection.

9. Fil fourré étanche comprenant au moins une enveloppe métallique et un flux de remplissage, caractérisé en ce qu'il contient une proportion totale d'azote inférieure à 100 ppm, de préférence inférieure à 80 ppm.

10. Fil fourré étanche selon la revendication 9, caractérisé en ce que la proportion totale d'azote contenue dans l'enveloppe métallique et dans ledit flux de remplissage est égale à au moins 60% environ de la proportion totale d'azote contenu dans ledit fil, de préférence à au moins 70% environ.

11. Fil fourré étanche selon la revendication 9, caractérisé en ce qu'il contient une proportion totale d'azote inférieure à 55 ppm.

12. Fil fourré étanche selon la revendication 9, comprenant au moins une enveloppe métallique et un flux de remplissage, caractérisé en ce qu'il contient des molécules d'azote gazeux et d'au moins un deuxième gaz choisi parmi l'argon, le dioxyde de carbone, l'oxygène et l'hélium, la proportion de molécules dudit deuxième gaz dans le fil fourré étant supérieure à la proportion de molécules d'azote gazeux dans ledit fil fourré.

13. Fil fourré étanche selon la revendication 12, caractérisé en ce que le deuxième gaz est l'argon ou le dioxyde de carbone.

14. Fil fourré étanche comprenant au moins une enveloppe métallique et un flux de remplissage, caractérisé en ce qu'il contient des molécules d'azote gazeux et des molécules d'oxygène gazeux, le rapport de la proportion de molécules d'azote gazeux dans le fil fourré à la proportion de molécules d'oxygène gazeux dans ledit fil fourré étant inférieur à 4, de préférence inférieur à 3.5, et en ce que la proportion totale d'azote dans ledit fil fourré étanche est inférieure à 100 ppm.

15. Fil fourré étanche selon l'une des revendications 9 à 14 susceptible d'être obtenu par un procédé de fabrication selon l'une des revendications 1 à 8.

16. Procédé de soudage à l'arc dans lequel on utilise un fil fourré étanche selon l'une des revendications 9 à 15, de préférence un procédé de soudage à l'arc choisi parmi les procédés de soudage TIG, MIG, MAG et à l'arc submergé.

17. Soudure susceptible d'être obtenue par mise en oeuvre d'un procédé selon la revendication 16, contenant moins de 60 ppm d'azote dans le métal fondu, de préférence moins de 50 ppm d'azote.

## Claims

1. Process for manufacturing at least one sealed welded metal tube containing filling elements and having a total nitrogen concentration of less than 100 ppm, starting from at least one metal sheet at least partially formed into a welded sealed tube or into an approximately gutter-shaped pre-tube, into which tube or pre-tube filling elements are introduced, which process comprises at least one operation of bringing the said filling elements into contact with a gaseous shielding atmosphere, at least while the said filling elements are being introduced into the said tube or pre-tube or after these elements have been introduced into the latter, the said gaseous shielding atmosphere comprising several gaseous compounds for each of which at least one of the parameters chosen from the nature of the said gaseous compounds, the concentration of the said gaseous compounds, the pressure of the said gaseous compounds and the flow rate of the said gaseous compounds is controlled,
the said gaseous compounds being chosen from nitrogen, hydrogen and water vapour;
and the gaseous shielding atmosphere essentially comprising at least one gas chosen from argon, helium, carbon dioxide, oxygen and mixtures thereof;
excluding a manufacturing process in which the gaseous atmosphere consists of atmospheric air at atmospheric pressure.

2. Manufacturing process according to Claim 1, characterized in that one of the gaseous compounds is nitrogen.

3. Manufacturing process according to either of Claims 1 and 2, characterized in that the nitrogen partial pressure in the said gaseous atmosphere is at most 0.77 × 10⁵ Pa and preferably at most 0.2 × 10⁵ Pa.

4. Manufacturing process according to one of Claims 1 to 3, characterized in that the said compounds, at least one of the parameters of which is controlled, are nitrogen, hydrogen and water vapour.

5. Manufacturing process according to one of Claims 1 to 4, characterized in that the filling elements are brought into contact with the said gaseous shielding atmosphere before, during and/or after the said filling elements have been introduced into the said welded sealed tube or into the said pre-tube.

6. Manufacturing process according to one of Claims 1 to 5, characterized in that at least the introduction of the filling elements is carried out under a gas flush using the said gaseous shielding atmosphere.

7. Manufacturing process according to one of Claims 1 to 6, characterized in that the filling elements start to be introduced after removal of at least some of the atmospheric air contained in at least part of the said pre-tube or the said tube, the said removal of the atmospheric air being carried out by implementing a gas flush using the said gaseous shielding atmosphere and/or by reducing the pressure in at least part of the said tube or pre-tube.

8. Manufacturing process according to one of Claims 1 to 7, characterized in that it furthermore comprises at least one step of welding at least part of a pre-tube, so as to obtain a sealed welded tube, and/or at least one step of recovering, recycling and/or purifying at least part of the said gaseous shielding atmosphere.

9. Sealed flux-cored wire comprising at least one metal sheath and a filling flux, characterized in that it has a total nitrogen concentration of less than 100 ppm, preferably less than 80 ppm.

10. Sealed flux-cored wire according to Claim 9, characterized in that the total nitrogen concentration in the metal sheath and in the said filling flux is equal to at least approximately 60% of the total nitrogen concentration in the said wire, preferably equal to at least approximately 70%.

11. Sealed flux-cored wire according to Claim 9, characterized in that it has a total nitrogen concentration of less than 55 ppm.

12. Sealed flux-cored wire according to Claim 9, comprising at least one metal sheath and a filling flux, characterized in that it contains molecules of gaseous nitrogen and molecules of at least one second gas chosen from argon, carbon dioxide, oxygen and helium, the concentration of molecules of the said second gas in the flux-cored wire being greater than the concentration of molecules of gaseous nitrogen in the said flux-cored wire.

13. Sealed flux-cored wire according to Claim 12, characterized in that the second gas is argon or carbon dioxide.

14. Sealed flux-cored wire comprising at least one metal sheath and a filling flux, characterized in that it contains molecules of gaseous nitrogen and molecules of gaseous oxygen, the ratio of the concentration of molecules of gaseous nitrogen in the flux-cored wire to the concentration of molecules of gaseous oxygen in the said flux-cored wire being less than 4, preferably less than 3.5, and in that the total nitrogen concentration in the said sealed flux-cored wire is less than 100 ppm.

15. Sealed flux-cored wire according to one of Claims 9 to 14, which can be obtained using a manufacturing process according to one of Claims 1 to 8.

16. Arc welding process, in which a sealed flux-cored wire according to one of Claims 9 to 15 is used, preferably an arc welding process chosen from TIG, MIG, MAG and submerged-arc processes.

17. Weld which can be obtained by implementing a process according to Claim 16, containing less than 60 ppm of nitrogen in the molten metal, preferably less than 50 ppm of nitrogen.

## Patentansprüche

1. Verfahren zur Herstellung mindestens eines dichtgeschweißten Metallrohrs mit Füllelementen und einem Gesamtstickstoffgehalt von weniger aus 100 ppm, aus mindestens einem Metallblech, das zumindest teilweise zu einem dichten geschweißten Rohr oder zu einer Rohrvorstufe mit im wesentlichen der Form eines Abflußrohrs geformt wird, wobei in dieses Rohr bzw. diese Rohrvorstufe Füllelemente eingebracht werden, wobei das Verfahren zumindest eine Kontaktierung der Füllelemente mindestens während oder nach dem Einbringen der Füllelemente in das Rohr bzw. die Rohrvorstufe mit einer Schutzgasatmosphäre mit mehreren gasförmigen Verbindungen umfaßt, bei denen man jeweils mindestens einen der Parameter ausgewählt aus Art der gasförmigen Verbindungen, Anteil der gasförmigen Verbindungen, Druck der gasförmigen Verbindungen und Strömungsrate der gasförmigen Verbindungen reguliert,
wobei die gasförmigen Verbindungen aus Stickstoff, Wasserstoff und Wasserdampf ausgewählt sind;
und die Schutzgasatmosphäre im wesentlichen mindestens ein Gas ausgewählt aus Argon, Helium, Kohlenstoffdioxid, Sauerstoff und deren Mischungen enthält;
mit Ausnahme eines Herstellungsverfahrens, bei dem die Gasatmosphäre aus unter Normalluftdruck stehender atmosphärischer Luft besteht.

2. Herstellungsverfahren nach Anspruch 1, dadurch gekennzeichnet, daß eine der gasförmigen Verbindungen Stickstoff ist.

3. Herstellungsverfahren nach Anspruch 1 oder 2, dadurch gekennzeichnet, daß der Stickstoff-Partialdruck in der Gasatmosphäre höchstens 0,77·10⁵ Pa, vorzugsweise höchstens 0,2·10⁵ Pa beträgt.

4. Herstellungsverfahren nach einem der Ansprüche 1 bis 3, dadurch gekennzeichnet, daß die Verbindungen, bei denen man mindestens einen der Parameter reguliert, Stickstoff, Wasserstoff und Wasserdampf sind.

5. Herstellungsverfahren nach einem der Ansprüche 1 bis 4, dadurch gekennzeichnet, daß die Kontaktierung der Füllelemente mit der Schutzgasatmosphäre vor, während und/oder nach dem Einbringen der Füllelemente in das dichte geschweißte Rohr bzw. die Rohrvorstufe erfolgt.

6. Herstellungsverfahren nach einem der Ansprüche 1 bis 5, dadurch gekennzeichnet, daß mindestens das Einbringen der Füllelemente unter Spülen mit der Schutzgasatmosphäre erfolgt.

7. Herstellungsverfahren nach einem der Ansprüche 1 bis 6, dadurch gekennzeichnet, daß das Einbringen der Füllelemente im Anschluß an das Entfernen mindestens eines Teils der in mindestens einem Teil der Rohrvorstufe oder des Rohrs enthaltenen atmosphärischen Luft beginnt, wobei das Entfernen der atmosphärischen Luft dadurch erfolgt, daß das Spülen mittels der Schutzgasatmosphäre erfolgt und/oder an mindestens einen Teil des Rohrs bzw. der Rohrvorstufe ein Unterdruck angelegt wird.

8. Herstellungsverfahren nach einem der Ansprüche 1 bis 7, dadurch gekennzeichnet, daß es außerdem mindestens eine Stufe zum Schweißen mindestens eines Teils einer Rohrvorstufe zu einem dichtgeschweißten Rohr und/oder mindestens eine Stufe zur Rückgewinnung, Rückführung und/oder Reinigung mindestens eines Teils der Schutzgasatmosphäre umfaßt.

9. Dichter Fülldraht mit mindestens einer Metallhülle und einer Füllmasse, dadurch gekennzeichnet, daß er einen Gesamtstickstoffgehalt von weniger als 100 ppm, vorzugsweise von weniger als 80 ppm aufweist.

10. Dichter Fülldraht nach Anspruch 9, dadurch gekennzeichnet, daß der in der Metallhülle und in der Füllmasse enthaltene Gesamtstickstoffgehalt mindestens etwa 60%, vorzugsweise mindestens etwa 70%, bezogen auf den im Draht enthaltenen Gesamtstickstoffgehalt, beträgt.

11. Dichter Fülldraht nach Anspruch 9, dadurch gekennzeichnet, daß er einen Gesamtstickstoffgehalt von weniger als 55 ppm aufweist.

12. Dichter Fülldraht nach Anspruch 9 mit mindestens einer Metallhülle und einer Füllmasse, dadurch gekennzeichnet, daß er gasförmige Stickstoffmoleküle und Moleküle mindestens eines zweiten Gases enthält, das ausgewählt ist aus Argon, Kohlenstoffdioxid, Sauerstoff und Helium, wobei der Anteil der Moleküle des zweiten Gases im Fülldraht höher ist als der Anteil der gasförmigen Stickstoffmoleküle im Fülldraht.

13. Dichter Fülldraht nach Anspruch 12, dadurch gekennzeichnet, daß das zweite Gas Argon oder Kohlenstoffdioxid ist.

14. Dichter Fülldraht mit mindestens einer Metallhülle und einer Füllmasse, dadurch gekennzeichnet, daß er gasförmige Stickstoffmoleküle und gasförmige Sauerstoffmoleküle enthält, wobei das Verhältnis des Anteils an gasförmigen Stickstoffmolekülen im Fülldraht zum Anteil an gasförmigen Sauerstoffmolekülen im Fülldraht weniger als 4, vorzugsweise weniger als 3,5 beträgt, und daß der Gesamtstickstoffgehalt in dem dichten Fülldraht weniger als 100 ppm beträgt.

15. Dichter Fülldraht nach einem der Ansprüche 9 bis 14, der nach einem Herstellungsverfahren nach einem der Ansprüche 1 bis 8 erhältlich ist.

16. Bogenschweißverfahren, bei dem man einen dichten Fülldraht nach einem der Ansprüche 9 bis 15 verwendet, vorzugsweise ein Bogenschweißverfahren, das aus dem TIG-, MIG-, MAG- und UP-Schweißverfahren ausgewählt ist.

17. Schweißung, die durch Durchführung eines Verfahrens nach Anspruch 16 herstellbar ist und im geschmolzenen Metall weniger als 60 ppm Stickstoff, vorzugsweise weniger als 50 ppm Stickstoff enthält.
